# EUROPÄISCHE PATENTSCHRIFT

(11) **EP 0 644 368 B1**
(45) Veröffentlichungstag und Bekanntmachung des Hinweises auf die Patenterteilung: **23.04.1997**
(21) Anmeldenummer: 94109096.1
(22) Anmeldetag: 14.06.1994
(51) Int. Cl.: F16N 11/10

(54) **Schmierstoffspender zur gasgesteuerten Abgabe eines Schmierstoffes an eine Maschine**
Lubricant dispenser for gas controlled dispensing of lubricant to a machine
Distributeur à graisse pour délivrance, commandé par gaz, de graisse à une machine

(30) Priorität: 21.09.1993 DE 4331947
(43) Veröffentlichungstag der Anmeldung: 22.03.1995
(73) Patentinhaber: Satzinger GmbH & Co., 97717 Euerdorf (DE)
(72) Erfinder: Graf, Walte, Dipl.-Ing., D-97717 Euerdorf (DE)
(74) Vertreter: Honke, Manfred, Dr.-Ing.

(56) Entgegenhaltungen:
- WO-A-88/09901
- WO-A-89/08800
- DE-A- 4 209 776
- DE-C- 3 532 335

## Beschreibung

Die Erfindung betrifft einen Schmierstoffspender zur gasgesteuerten Abgabe eines Schmierstoffes an eine Maschine - mit einem Gehäuse für die Aufnahme eines Schmierstoffvorrates, einem Maschinenanschlußteil mit Schmierstoffabgabekanal an einer Seite des Gehäuses sowie einer Entwicklungszelle an der dem Maschinenanschlußteil gegenüberliegenden Seite des Gehäuses und mit einem in das Gehäuse eingepaßten Stellkolben, dessen Bewegung von dem entwickelten Gas, die Schmierstoffrate bestimmend, steuerbar ist. - Schmierstoffrate bezeichnet den Schmierstoffmengenstrom in der Zeiteinheit. Die Gasentwicklung ist bei Inbetriebnahme des stoffspenders einschaltbar und danach ein langsamer, zeitabhängiger Vorgang, der mit der Erschöpfung der Gasentwicklung endet. Es versteht sich, daß die Gasentwicklung auch unterbrochen werden kann.

Bei dem bekannten Schmierstoffspender des eingangs beschriebenen Aufbaus (DE-A-38 11 469) ist das Gehäuse auf der dem Anschlußteil gegenüberliegenden Seite durch einen angeformten Boden abgeschlossen. In dem Boden befindet sich eine zentrale Ausnehmung. Das Anschlußteil befindet sich in einem in den Gehäusemantel eingesetzten Deckel, der mit Hilfe einer Falznaht gehalten ist. Die Gasentwicklungszelle ist kein selbständiges Bauteil. Sie besteht aus einem Bodenteil und einer elastischen Haube, die mit dem Bodenteil verbunden ist. In dem Bodenteil der Gasentwicklungszelle befindet sich eine Magazinaufnahme, die zur elastischen Haube hin durch eine Trennwand abgeschlossen ist. Die Gasentwicklungzelle wird mit der Gasentwicklungsflüssigkeit gefüllt und als vorgefertigtes Bauteil vor dem Einsetzen des Deckels in das Gehäuse eingeführt. Danach wird der Stellkolben in das Gehäuse eingesetzt, und der Deckel mit dem Anschlußteil wird aufgesetzt. Der Stellkolben wird nicht unmittelbar von dem Gas, welches sich nach Inbetriebnahme des Schmierstoffspenders entwickelt, beaufschlagt, er wird vielmehr von der elastischen Haube beaufschlagt, die sich bei der Gasentwicklung aufbläht. In die zentrale Ausnehmung des Bodens wird das Magazin eingesetzt, es wird in die Magazinaufnahme eingeschraubt und kann die Trennwand der Magazinaufnahme absprengen oder zerstören. Das Magazin selbst besitzt einen Hohlraum für die Aufnahme des Gasentwicklungselementes. Dieser ist von einer membranartigen Trennwand abgeschlossen, die galvanisch zerstört wird, wenn das Magazin in der beschriebenen Weise eingeschraubt ist und die Gasentwicklungsflüssigkeit mit dieser Trennwand in Verbindung kommt. Die bekannte Ausführungsform ist in fertigungstechnischer und in montagetechnischer Hinsicht aufwendig. Sie ist in funktioneller Hinsicht verbesserungsfähig, da der Gasdruck nicht unmittelbar den Stellkolben beaufschlagt, sondern auch die elastische Verformung der Haube überwinden muß und die Rückstellkräfte mit zunehmender elastischer Verformung dieser Haube sich vergrößern. Bei einem anderen Schmierstoffspender (DE-C-37 18 341) ist die Gasentwicklungszelle ebenfalls kein selbständiges Bauteil, sondern ein Raumbereich in dem Gehäuse, den der Stellkolben von dem Schmiermittelvorrat abtrennt. Der abgetrennte Raumbereich dient zur Aufnahme des erzeugten Gases. Die Gaserzeugung erfolgt mit Hilfe eines besonderen gaserzeugenden Elementes, welches in dem Stellkolben angeordnet ist. Als gaserzeugendes Element kann ein Elektrolytbehälter und ein Korrosionselement vorgesehen sein. Man kann aber auch als gaserzeugendes Element einen Elektrolytbehälter und je eine in die Elektrolytflüssigkeit eintauchende Anode und Kathode vorsehen, die einem entsprechenden Stromkreis angehören. Auch bei dieser Ausführungsform ist das Anschlußteil ein Deckel, der mit dem Gehäusemantel über eine Falzverbindung verbunden ist. Dieser Deckel wird aufgesetzt, nachdem der Stellkolben mit dem eingesetzten gaserzeugenden Element in das Gehäuse eingeführt worden ist. Durch den Boden des Gehäuses führen Leitern nach außen. Das alles hat die Weiterentwicklung der eingangs beschriebenen Schmierstoffspender nicht beeinflußt und bisher in die Praxis keinen Eingang gefunden.

Bei einem anderen Schmierstoffspender (WO-A-89/08800)funktioniert die Gasentwicklung in bezug auf ihre Einwirkung auf die Schmierstoffrate wie vorstehend beschrieben. Die Elektrochemie der Zusammenhänge ist jedoch anders eingerichtet (vergl. DE-C-35 32 335). Es wird mit sogenannten Batteriezellen gearbeitet. Hier kann die Gasentwicklung über die Einschaltung oder Ausschaltung der Batterie einfach eingeleitet und unterbrochen werden. Bei zusätzlicher Anordnung eines verstellbaren Potentiometers können die Gasentwicklung und die Schmierstoffrate gesteuert werden.

Bei dem Schmierstoffspender, von dem die Erfindung ausgeht, (nicht vor veröffentlichte DE-A-42 09 776) ist die Gasentwicklungszelle als ein selbständiges Bauteil ausgeführt, welches aus einem Bodenteil, einer Magazinaufnahme und einer Abdeck-Kappe besteht sowie in eine Ausnehmung des Gehäuses als Boden einsetzbar und in dieser festsetzbar ist, wobei die Abdeck-Kappe mit dem Bodenteil abschiebbar verbunden und in die Magazinaufnahme im Magazin mit einem darin untergebrachten galvanischen Gasentwicklungselement einsetzbar ist. Die Abdeck-Kappe funktioniert hier zugleich als Stellkolben. Die Anordnung ist so getroffen, daß im jungfräulichen Zustand der Gasentwicklungszelle in dem Raum zwischen Bodenteil und Abdeck-Kappe eine Gasentwicklungsflüssigkeit angeordnet ist, mit der das Gasentwicklungselement bei Kontakt gasbildend reagiert und von der das in die Magazinaufnahme eingesetzte Magazin mit dem Gasentwicklungselement im jungfräulichen Zustand der Gasentwicklungszelle durch eine Trennwand getrennt ist. Die Abdeck-Kappe ist zugleich als Stellkolben ausgebildet. Die Trennwand ist durch Betätigung einer mit dem Magazin verbundenen mechanischen Einschalteinrichtung abdrückbar oder zerstörbar, so daß das Gasentwicklungselement mit der Gasentwicklungsflüssigkeit in Kontakt kommt und die Gasentwicklung einsetzt, wobei die als Stellkolben ausgebildete Abdeck-Kappe von dem sich entwickelnden Gas von dem Bodenteil abschiebbar sowie dabei und danach von dem Gas als Stellkolben weiterbewegbar ist. Diese Maßnahmen haben sich bewährt.

Der Erfindung liegt das technische Problem zugrunde, den zuletzt beschriebenen Schmierstoffgeber mit einer batteriegesteuerten Gasentwicklungszelle auszurüsten.

Zur Lösung dieses Problems ist Gegenstand der Erfindung ein Schmierstoffspender zur gasgesteuerten Abgabe eines Schmierstoffes an eine Maschine, - mit
einem Gehäuse für die Aufnahme eines Schmierstoffvorrates,
einem Maschinenanschlußteil mit Schmierstoffabgabekanal an einer Seite des Gehäuses sowie
einer Gasentwicklungszelle, an der dem Maschinenanschlußteil gegenüberliegenden Seite des Gehäuses und mit
einem in das Gehäuse eingepaßten Stellkolben, dessen Bewegung von dem entwickelten Gas, die Schmierstoffrate bestimmend, steuerbar ist,
wobei die Gasentwicklungszelle als ein selbständiges Bauteil ausgeführt ist, welches aus einem Bodenteil, einer Magazinaufnahme und einer Abdeck-Kappe besteht sowie in eine Ausnehmung des Gehäuses als Boden einsetzbar und in dieser festsetzbar ist, wobei die Abdeck-Kappe mit dem Bodenteil abschiebbar verbunden und in die Magazinaufnahme ein Magazin mit einem darin untergebrachten galvanischen Gasentwicklungselement einsetzbar ist,
wobei die Abdeck-Kappe zugleich als Stellkolben ausgebildet ist,
wobei das Gasentwicklungselement eine Batteriezelle aufweist, an die eine in dem Magazin untergebrachte elektrische Betriebsbatterie angeschlossen ist, die wahlweise ein- und ausschaltbar ist, und
wobei die Abdeck-Kappe bei eingeschalteter Betriebsbatterie und dadurch bewirkter Gasentwicklung von dem Bodenteil abschiebbar und die Schmierstoffrate steuernd als Stellkolben bewegbar ist.

Die Erfindung geht von der Erkenntnis aus, daß der grundsätzliche Aufbau des Schmierstoffspenders, von dem die Erfindung ausgeht (DE-A-42 09 776), es erlaubt, auf sehr einfache Weise die Gasentwicklung auch mit einer batteriebetriebenen Gasentwicklungszelle durchzuführen. Dazu sind nur wenige Elemente des Schmierstoffspenders, von dem die Erfindung ausgeht, zu verändern.

Im einzelnen bestehen im Rahmen der Erfindung mehrere Möglichkeiten der weiteren Ausbildung und Gestaltung des erfindungsgemäßen Schmierstoffspenders. So kann der Betriebsbatterie ein Potentiometerwiderstand zugeordnet sein, der ebenfalls in dem Magazin untergebracht ist, wobei der Potentiometerwiderstand zur Steuerung der Gasentwicklung eingerichtet oder einstellbar ist.

Durch fertigungstechnische Einfachheiten ausgezeichnet ist eine Ausführungsform, bei der das Magazin als ein zylindrisches Bauteil ausgeführt ist, in eine zugeordnete Aufnahme des Bodenteils eingeschraubt und durch einen Deckel nach außen abdichtend verschlossen ist. Man kann aber die Anordnung auch so treffen, daß das Magazin als ein zylindrisches Bauteil ausgeführt sowie in eine zylindrische Buchse nach außen abgedichtet eingesetzt und mit der zylindrischen Buchse in eine zugeordnete Aufnahme des Bodenteils eingeschraubt ist. Das Magazin, die zylindrische Buchse und ebenso die weiteren Bauteile des Gehäuses mit Maschinenanschlußteil lassen sich auf einfache Weise aus plastischem Kunststoff spritzen.

Im folgenden wird die Erfindung anhand einer lediglich ein Ausführungsbeispiel darstellenden Zeichnung ausführlicher erläutert. Es zeigen in schematischer Darstellung
- Fig. 1: teilweise im Vertikalschnitt eine Ansicht eines erfindungsgemäßen Schmierstoffgebers, wobei die wesentlichen Bauteile auseinandergezogen sind,
- Fig. 2: den Gegenstand nach Fig.1 mit zusammengesetzter Gasentwicklungszelle und eingesetztem Magazin,
- Fig. 3: in gegenüber den Fig. 1 und 2 wesentlich vergrößtem Maßstab den Ausschnitt A aus dem Gegenstand der Fig. 2 im Vertikalschnitt und
- Fig. 4: entsprechend der Fig. 3 eine andere Ausführungsform eines erfindungsgemäßen Schmierstoffgebers.

Der in den Figuren dargestellte Schmierstoffspender dient zur gesteuerten Abgabe eines Schmiermittels an eine Maschine. Zum grundsätzlichen Aufbau gehören ein Gehäuse 1 für die Aufnahme eines Schmierstoffvorrates, ein Maschinenanschlußteil 2 mit Schmierstoffabgabekanal 3 an einer Seite des Gehäuses sowie eine Gasentwicklungszelle 4 an der dem Anschlußteil 2 gegenüberliegenden Seite des Gehäuses 1. Zum grundsätzlichen Aufbau gehört fernerhin ein in das Gehäuse 1 eingepaßter Stellkolben. Die Bewegung des Stellkolbens ist von dem entwickelten Gas steuerbar.

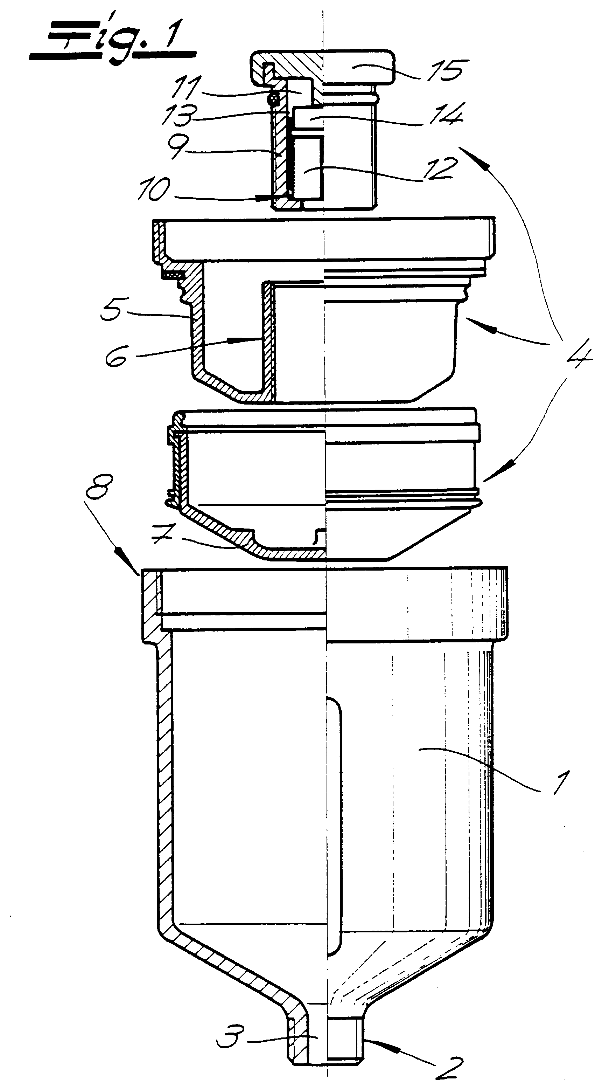

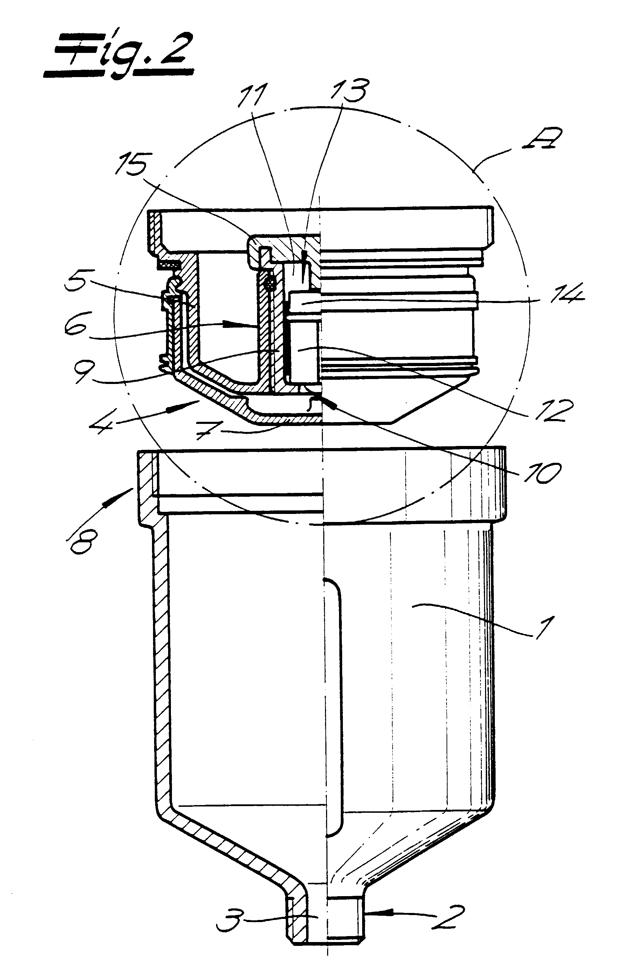

Aus einer vergleichenden Betrachtung der Fig. 1 und 2 entnimmt man zunächst, daß die Gasentwicklungszelle 4 als ein selbständiges Bauteil ausgeführt ist, welches aus einem Bodenteil 5, einer Magazinaufnahme 6 und einer Abdeck-Kappe 7 besteht. Die Gasentwicklungszelle 4 ist in eine Ausnehmung des Gehäuses 1 als Boden einsetzbar sowie in dieser festsetzbar. Im Ausführungsbeispiel besitzt das Gehäuse 1 einen besonderen Aufnahmebund 8 für das Einsetzen der Gasentwicklungszelle 4. Vergleicht man die Fig. 1 bis 4, so erkennt man, daß die Abdeck-Kappe 7 mit dem Bodenteil 5 abschiebbar verbunden ist und daß in die Magazinaufnahme 6 ein Magazin 9 mit einem darin untergebrachten galvanischen Gasentwicklungselement 10 einsetzbar und eingesetzt ist. Die Abdeck-Kappe 7 ist ein Hohlkolben, der auf einem zylindrischen Ansatz des Bodenteils 5 geführt ist. Das Gasentwicklungselement weist eine Batteriezelle 11 und eine Betriebsbatterie 12 auf. Zum Ein- und Ausschalten dient die schaltvorrichtung 13.

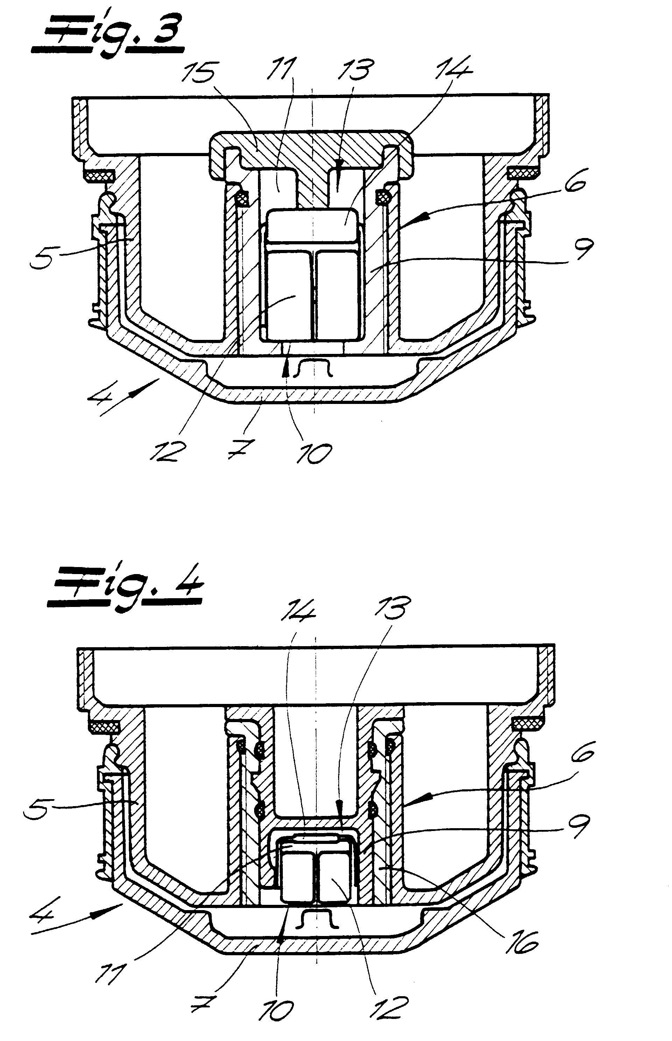

Insbesondere aus den Fig. 3 und 4 entnimmt man, daß die Abdeck-Kappe 7 zugleich als Stellkolben ausgebildet ist. Die Gasentwicklung schiebt zunächst die als Stellkolben ausgebildete Abdeck-Kappe 7 von dem Bodenteil 5 ab. Sie ist danach von dem Gas als Stellkolben weiterbewegbar und auf dem zylindrischen Ansatz geführt. Folglich wird erreicht, daß die Abdeck-Kappe 7 bei eingeschalteter Betriebsbatterie und dadurch bewirkter Gasentwicklung die Schmierstoffrate steuert.

Bei der Ausführungsform nach den Fig. 1 bis 3 ist der Betriebsbatterie ein Potentiometerwiderstand 14 zugeordnet, der in dem Magazin 9 untergebracht ist. Der Potentiometerwiderstand 14 ist so eingerichtet, daß er die Schmierstoffrate bis zur vollständigen Entladung der Betriebsbatterie 12 steuert. Es besteht aber auch die Möglichkeit, die Anordnung so zu treffen, daß der Potentiometerwiderstand 14 zur Steuerung der Gasentwicklung und damit der Schmierstoffrate einstellbar ist.

Bei der Ausführungsform nach den Fig. 1 bis 3 ist das Magazin 9 als ein zylindrisches Bauteil ausgeführt, in eine zugeordnete Magazinaufnahme 6 des Bodenteils 5 eingeschraubt und durch einen Deckel 15 nach außen abdichtend verschlossen. Bei der Ausführungsform nach Fig. 4 ist das Magazin 9 als ein zylindrisches Bauteil ausgeführt sowie in eine zylindrische Buchse 16 nach außen abgedichtet eingesetzt. Mit der zylindrischen Buchse 16 ist das Magazin 9 in eine zugeordnete Magazinaufnahme 6 des Bodenteils eingeschraubt.

## Patentansprüche

1. Schmierstoffspender zur gasgesteuerten Abgabe eines Schmierstoffes an eine Maschine, - mit
einem Gehäuse (1) für die Aufnahme eines Schmierstoffvorrates,
einem Maschinenanschlußteil (2) mit Schmierstoffabgabekanal (3) an einer Seite des Gehäuses (1) sowie
einer Gasentwicklungszelle (4), an der dem Maschinenanschlußteil (2) gegenüberliegenden Seite des häuses (1) und mit
einem in das Gehäuse (1) eingepaßten Stellkolben, dessen Bewegung von dem entwickelten Gas, die Schmierstoffrate bestimmend, steuerbar ist,
wobei die Gasentwicklungszelle (4) als ein selbständiges Bauteil ausgeführt ist, welches aus einem Bodenteil (5), einer Magazinaufnahme (6) und einer Abdeck-Kappe (7) besteht sowie in eine Ausnehmung des Gehäuses (1) als Boden einsetzbar und in dieser festsetzbar ist, wobei die Abdeck-Kappe (7) mit dem Bodenteil (5) abschiebbar verbunden und in die Magazinaufnahme (6) ein Magazin mit einem darin untergebrachten galvanischen Gasentwicklungselement (10) einsetzbar ist,
wobei die Abdeck-Kappe (7) zugleich als Stellkolben ausgebildet ist,
wobei das Gasentwicklungselement eine Batteriezelle (11) aufweist, an die eine in dem Magazin (9) untergebrachte elektrische Betriebsbatterie (12) angeschlossen ist, die wahlweise ein- und ausschaltbar ist, und
wobei die Abdeck-Kappe (7) bei eingeschalteter Betriebsbatterie (12) und dadurch bewirkter Gasentwicklung von dem Bodenteil (5) abschiebbar und die Schmierstoffrate steuernd als Stellkolben bewegbar ist.

2. Schmierstoffspender nach Anspruch 1, wobei der Betriebsbatterie ein Potentiometerwiderstand (14) zugeordnet ist, der ebenfalls in dem Magazin untergebracht ist, und wobei der Potentiometerwiderstand (14) zur Steuerung der Gasentwicklung eingerichtet oder einstellbar ist.

3. Schmierstoffspender nach einem der Ansprüche 1 oder 2, wobei das Magazin (9) als ein zylindrisches Bauteil ausgeführt, in eine zugeordnete Magazinaufnahme (6) des Bodenteils (5) einschraubbar und durch einen Deckel nach außen abdichtend verschlossen ist.

4. Schmierstoffspender nach einem der Ansprüche 1 oder 2, wobei das Magazin (9) als ein zylindrisches Bauteil ausgeführt sowie in eine zylindrische Buchse (16) nach außen abgedichtet eingesetzt und mit der zylindrischen Buchse (16) in eine zugeordnete Magazinaufnahme (6) des Bodenteils (5) eingeschraubt ist.

5. Schmierstoffspender nach einem der Ansprüche 1 bis 4, wobei das Magazin (9) und/oder die zylindrische Buchse (16) ebenso wie die weiteren Bauteile des Gehäuses (1) mit Maschinenanschlußteil (2) aus thermoplastischem Kunststoff durch Spritzgießen geformt sind.

## Claims

1. A lubricant dispenser for the gas-controlled delivery of a lubricant to a machine, having
a housing (1) for receiving a lubricant supply,
a machine connection part (2) with a lubricant delivery channel (3) on one side of the housing (1), and
a gas evolution cell (4) on the opposite side of the housing (1) to the connection part (2), and having
an operating piston which is fitted into the housing (1), and the movement of which can be controlled by the gas evolved so as to determine the lubricant rate,
wherein the gas evolution cell (4) is designed as an autonomous component which consists of a base part (5), a magazine receiver (6) and a cover cap (7) and which can be inserted as a base in a recess of the housing (1) and can be fixed therein, wherein the cover cap (7) is attached to the base part (5) so that it can be pushed off and a magazine having an electrochemical gas evolution element (10) accommodated therein can be inserted in the magazine receiver (6),
wherein the cover cap (7) is constructed at the same time as the operating piston,
wherein the gas evolution element comprises a battery-operated cell (11) to which an electrical operating battery (12) is connected which is accommodated in the magazine (9) and which can be connected and disconnected according to choice, and
wherein, when the operating battery (12) is connected and when gas evolution is thereby effected, the cover cap (7) can be pushed off from the base part (5) and can be moved as an operating piston controlling the lubricant rate.

2. A lubricant dispenser according to claim 1, wherein a potentiometer resistor (14) is associated with the operating battery and is also accommodated in the magazine, and wherein the potentiometer resistor (14) is set or is adjustable for the control ofthe gas evolution.

3. A lubricant dispenser according to either one of claims 1 or 2, wherein the magazine (9) is designed as a cylindrical component, can be screwed into an associated magazine receiver (6) in the base part (5) and is closed and externally sealed by a cover.

4. A lubricant dispenser according to either one of claims 1 or 2, wherein the magazine (9) is designed as a cylindrical component and is inserted externally sealed in a cylindrical bushing (16), and can be screwed with the cylindrical bushing (16) into an associated magazine receiver (6) in the base part (5).

5. A lubricant dispenser according to any one of claims 1 to 4, wherein the magazine (9) and/or the cylindrical bushing (16) is formed from synthetic thermoplastic material by injection-moulding, as are the other components of the housing (1) including the machine connection part (2).

## Revendications

1. Distributeur de graisse pour délivrance, commandée par gaz, de graisse à une machine, comprenant
un boîtier (1) destiné au logement d'une réserve de graisse,
une pièce de raccord à une machine (2) comportant un canal de délivrance de graisse (3) sur un côté du boîtier (1),
une cellule d'émission de gaz (4) sur le côté du boîtier (1) qui est opposé à la pièce de raccord à une machine (2) et
un piston de réglage monté dans le boîtier (1), dont le mouvement peut être commandé par le gaz émis, déterminant la quantité de graisse,
et dans lequel
la cellule d'émission de gaz (4) est réalisée sous la forme d'un composant autonome, constitué d'une partie formant fond (5), d'un logement de magasin (6) et d'une chape (7) et pouvant être inséré comme fond dans un évidement du boîtier (1) et être fixé dans celui-ci, la chape (7) étant reliée à la partie formant fond (5) de manière à pouvoir être repoussée, et un magasin comportant un élément d'émission de gaz (10) galvanique logé dans ledit magasin pouvant être inséré dans le logement de magasin (6),
la chape (7) est réalisée également sous la forme d'un piston de réglage,
l'élément d'émission de gaz présente une cellule de batterie (11) à laquelle est raccordée une batterie de service (12) électrique logée dans le magasin (9) et pouvant être mise sous et hors tension à la demande, et
la chape (7) peut être repoussée de la partie formant fond (5) par la mise sous tension de la batterie de service (12) et l'émission de gaz ainsi provoquée, et peut se déplacer comme piston de réglage, commandant ainsi la quantité de graisse.

2. Distributeur de graisse suivant la revendication 1, dans lequel une résistance potentiométrique (14) également logée dans le magasin est associé à la batterie de service, la résistance potentiométrique (14) étant configurée, ou pouvant être réglée, pour la commande de l'émission de gaz.

3. Distributeur de graisse suivant l'une des revendications 1 ou 2, dans lequel le magasin (9) est réalisé sous la forme d'un composant cylindrique, peut être vissé dans un logement de magasin (6) associé de la partie formant fond (5), et est obturé de façon étanche vers l'extérieur par un couvercle.

4. Distributeur de graisse suivant l'une des revendications 1 ou 2, dans lequel le magasin (9) est réalisé sous la forme d'un composant cylindrique, est monté, de manière étanche vers l'extérieur, dans un coussinet (16) cylindrique, et est vissé, avec le manchon cylindrique (16), dans un logement de magasin (6) associé de la partie formant fond (5).

5. Distributeur de graisse suivant l'une des revendications 1 à 4, dans lequel le magasin (9) et/ou le manchon cylindrique (16), ainsi que les autres composants du boîtier (1) comportant la pièce de raccord à une machine (2), sont formés par injection d'un matériau thermoplastique.
